# EUROPÄISCHE PATENTSCHRIFT

(11) **EP 4 098 786 B1**
(45) Veröffentlichungstag und Bekanntmachung des Hinweises auf die Patenterteilung: **09.10.2024**
(21) Anmeldenummer: 22176292.5
(22) Anmeldetag: 31.05.2022
(51) Int. Cl.: D01H 4/08, F16B 19/02

(54) **SPINNVORRICHTUNG**
SPINNING DEVICE
DISPOSITIF DE FILATURE

(30) Priorität: 02.06.2021 DE 102021114272
(43) Veröffentlichungstag der Anmeldung: 07.12.2022
(73) Patentinhaber: Saurer Spinning Solutions GmbH & Co. KG, 52531 Übach-Palenberg (DE)
(72) Erfinder: Jakobinski, Andreas, 41812 Erkelenz (DE); Thomas, Sebastian, 41189 Mönchengladbach (DE); Keuter, Florian, 52499 Baesweiler (DE); Winzen, Lothar, 52134 Herzogenrath (DE)
(74) Vertreter: Schniedermeyer, Markus

(56) Entgegenhaltungen:
- DE-A1- 102013 225 594
- DE-A1- 102017 222 766
- DE-A1- 19 603 730
- DE-A1- 19 617 527

## Beschreibung

Die Erfindung betrifft eine Spinnvorrichtung zum Herstellen eines Garns aus einem Fasermaterial.

Verschiedene Spinnvorrichtungen sind aus dem Stand der Technik bekannt und werden dabei zum Herstellen eines Garns aus einem Fasermaterial verwendet. Bei einer Offenend-Rotorspinnvorrichtung werden dabei vereinzelte Textilfasern einem im Spinnbetrieb mit hoher Drehzahl umlaufenden Spinnrotor zugeleitet und dort zu einem Garn gesponnen, das dann von dem Spinnrotor abgezogen wird. Die Spinnvorrichtung weist dabei ein Rotorgehäuse auf, innerhalb dem der Spinnrotor angeordnet ist. Zum Öffnen und Schließen des Rotorgehäuses ist typischerweise ein Rotorgehäusedeckel vorgesehen.

Dabei ist gewöhnlich ein Kanalplattenadapter auswechselbar an dem Rotorgehäuse und insbesondere an dem Rotorgehäusedeckel festgelegt, wobei der Kanalplattenadapter typischerweise mit einer ringförmigen Dichtung am Rotorgehäuse anliegt und dieses luftdicht verschließt, um den Spinnbetrieb zu ermöglichen. Der Kanalplattenadapter reicht dabei mit einem Fortsatz, der unter anderem den Mündungsbereich des Faserleitkanals aufweist, in den umlaufenden Rotor. Auf diese Weise ist gewährleistet, dass der Mündungsbereich des Faserleitkanals ausreichend nahe an einer Wand des Spinnrotors positioniert ist und die im Faserkanal herantransportierten Einzelfasern vorschriftsmäßig auf den Spinnrotor aufgespeist werden. Da jeder Kanalplattenadapter und insbesondere dessen Fortsatz auf einen bestimmten Rotordurchmesser abgestimmt ist, muss der Kanalplattenadapter regelmäßig ausgetauscht werden, beispielsweise im Zuge eines Garnpartiewechsels mit einem damit einhergehenden Austausch des Spinnrotors.

Aus dem Stand der Technik sind verschiedene Arten der Festlegung eines solchen Kanalplattenadapters an dem Rotorgehäusedeckel bekannt. Aus der Druckschrift DE 43 34 485 A1 ist es beispielsweise bekannt, den Kanalplattenadapter mittels mehrerer Schraubbolzen zu fixieren, was jedoch kompliziert, zeitaufwändig und nicht werkzeuglos möglich ist. Zudem besteht die Gefahr einer Beschädigung des Kanalplattenadapters und/oder des Rotorgehäusedeckels beim Anziehen der Schraubbolzen.

Die DE 196 03 730 A1 betrifft eine Faserkanalplatte einer Offenend-Spinnvorrichtung mit einem Spinnrotor, der in einem besaugten, durch ein Deckelelement verschließbaren Rotorgehäuse umläuft. In einer Aufnahme des als Faserkanalplatte ausgebildeten Deckelelementes ist ein Kanalplattenadapter lösbar befestigt. In den Kanalplattenadapter ist eine Tangentialnut eingearbeitet, die im eingebauten Zustand ein federkraftbeaufschlagtes Arretierungsmittel aufnimmt.

Aus der DE 198 36 073 A1 ist eine rein magnetische Festlegung eines Kanalplattenadapters bekannt, was jedoch den Nachteil hat, dass der Kanalplattenadapter bei hohen, während des Spinnbetriebs auftretenden Kräften wenigstens verschoben oder sogar abgelöst werden kann, was wenigstens zu einer Unterbrechung des Spinnbetriebs und gegebenenfalls auch zu einer Beschädigung des mit hoher Drehzahl rotierenden Spinnrotors führen kann.

Schließlich ist es aus dem Stand der Technik bekannt, mehrere verschwenkbare Fixierelemente zu verwenden, um den Kanalplattenadapter am Rotorgehäusedeckel festzulegen, was jedoch zum einen zu einem komplexen und aufwändigen Aufbau der Spinnvorrichtung führt und zum anderen ein schnelles, sicheres und vor allem auch spannungsfreies Festlegen des Kanalplattenadapters nur schwer möglich macht. Zudem können die dazu typischerweise verwendeten Schwenkhebel zum Fixieren des Kanalplattenadapters durch eine erhöhte Krafteinwirkung und/oder durch Vibrationen beim Betrieb unerwünscht geöffnet werden, sodass sich der Kanalplattenadapter von dem Rotorgehäusedeckel löst, was zu einer Betriebsstörung und im schlimmsten Fall zu einer Beschädigung der Spinnvorrichtung führt.

Der Erfindung liegt daher die Aufgabe zugrunde, eine kostengünstige und einfach aufgebaute Spinnvorrichtung bereitzustellen, bei der ein Kanalplattenadapter nicht nur zuverlässig und bei Bedarf leicht auswechselbar in einer Aufnahme des Deckelelements festlegbar ist, sondern bei der auch sichergestellt ist, dass der Kanalplattenadapter beim Auftreten betriebsbedingter Kräfte und Vibrationen langfristig und zuverlässig in seiner Position festgelegt wird.

Die Aufgabe wird erfindungsgemäß durch eine Spinnvorrichtung gemäß Anspruch 1 gelöst. Vorteilhafte Weiterbildungen der Erfindung sind in den abhängigen Ansprüchen angegeben.

Die erfindungsgemäße Spinnvorrichtung zum Herstellen eines Garns aus einem Fasermaterial weist ein Rotorgehäuse, innerhalb dem ein im Spinnbetrieb mit hoher Drehzahl umlaufender Spinnrotor angeordnet ist, einen am Rotorgehäuse angeordneten Rotorgehäusedeckel zum Öffnen und Schließen des Rotorgehäuses und einen am Rotorgehäuse und insbesondere am Rotorgehäusedeckel auswechselbar festgelegten Kanalplattenadapter auf, wobei das Festlegen des Kanalplattenadapters an dem Rotorgehäuse und insbesondere an dem Rotorgehäusedeckel durch ein Verschieben eines Schließbolzens einer Arretiervorrichtung aus einer Freigabeposition in die Verriegelungsposition erfolgt und der Schließbolzen mittels einer Feder auf die Verriegelungsposition vorgespannt ist.

Die Spinnvorrichtung kann zunächst eine beliebige Vorrichtung zur Herstellung von Fäden, Garnen oder Zwirnen sein. Bevorzugt ist die Spinnvorrichtung eine Rotorspinnmaschine, insbesondere bevorzugt eine Offenend-Rotorspinnmaschine. Die Spinnmaschine kann nur eine oder mehrere jeweils zum Herstellen eines Fadens vorgesehene Spinnstellen aufweisen, wobei jede Spinnstelle besonders bevorzugt als Spinnbox gebildet ist und ganz besonders bevorzugt jeweils einen Spinnrotor aufweist.

Ein hergestelltes Garn bzw. der hergestellte Faden im Sinne der Erfindung ist ein Faserverband, der bevorzugt aus einzelnen, jeweils umeinander gewundenen Fasern gebildet ist. Dabei können die Fasern aus einem natürlichen Material, wie Wolle oder Baumwolle, und/oder aus einem synthetischen Material, wie beispielsweise Polyester oder Polyethersulfon, gebildet sein. Das Fasermaterial wird der Spinnvorrichtung dabei bevorzugt in Form eines Faserbandes, auch Kardenband genannt, zugeführt und vor dem Spinnen werden die einzelnen Fasern bevorzugt vereinzelt.

Das Rotorgehäuse umgibt grundsätzlich den im Spinnbetrieb mit hoher Drehzahl rotierenden Spinnrotor und wird im Spinnbetrieb bevorzugt mit einem Unterdruck beaufschlagt. Um das Rotorgehäuse öffnen und an den Spinnrotor gelangen zu können, ist ein Rotorgehäusedeckel schwenkbar am Rotorgehäuse gelagert. Bevorzugt weist der Rotorgehäusedeckel einen Faserleitkanal zum Zuführen von Fasern zum Spinnrotor auf, wobei besonders bevorzugt der Kanalplattenadapter im Bereich dieses Faserleitkanals angeordnet bzw. festgelegt ist. Ganz besonders bevorzugt weist der Kanalplattenadapter wenigstens einen Abschnitt des Faserleitkanals auf.

Der Kanalplattenadapter kann grundsätzlich ein Bauteil oder eine Baugruppe sein und ist dabei bevorzugt derart gebildet, dass der Kanalplattenadapter luftdicht an dem Rotorgehäuse angeordnet und festgelegt werden kann, um einen Betrieb mit einem Unterdruck im Inneren des Rotorgehäuses zu ermöglichen. Entsprechend wird bevorzugt in einer geschlossenen Position des Kanalplattenadapters am Rotorgehäusedeckel ein luftdichter und insbesondere ein unterdruckdichter Verschluss erreicht. Dabei ist der Kanalplattenadapter, der bevorzugt die Frontseite des Rotorgehäuses verschließt, besonders bevorzugt Teil des schwenkbaren Rotorgehäusedeckels, der insbesondere bevorzugt die gesamte Frontseite der Spinnbox bzw. des Rotorgehäuses überdeckt. An der Vorderseite der Spinnbox und insbesondere im Bereich der Vorderseite des Rotorgehäuses sind bevorzugt wenigstens eine Einzugswalze, eine Auflöseeinrichtung für das zugeführte Faserband und/oder eine Vorrichtung zur Schmutzausscheidung angeordnet.

Der Kanalplattenadapter ist auswechselbar an dem Rotorgehäuse oder an dem Rotorgehäusedeckel und insbesondere bevorzugt an einer Faserkanalplatte des Rotorgehäuses bzw. Rotorgehäusedeckels angeordnet. Der Kanalplattenadapter enthält dabei bevorzugt einen Teil des Faserleitkanals, eine Fadenabzugsdüse und/oder einen Anschluss an das Fadenabzugsröhrchen. Dabei ist jeder Kanalplattenadapter auf eine bestimmte Spinnrotorform und -größe abgestimmt, um eine genaue Fasereinspeisung und einen optimalen Fadenabzug zu gewährleisten. Bei einem Partiewechsel, der auch einen Rotorwechsel bedingen kann, wird der Kanalplattenadapter typischerweise durch einen auf den neuen Spinnrotor abgestimmten Kanalplattenadapter ausgewechselt.

Dazu wird der Kanalplattenadapter erfindungsgemäß mittels einer Arretiervorrichtung festgelegt, wobei das Festlegen des Kanalplattenadapters an dem Rotorgehäuse und bevorzugt an dem Rotorgehäusedeckel durch eine federbelastete Verriegelung erfolgt. Unter dem Festlegen des Kanalplattenadapters durch den federvorgespannten Schließbolzen wird die endgültige Festlegung verstanden, die sowohl ausschließlich mittels des Schließbolzens erfolgen als auch bevorzugt durch wenigstens eine weitere form- und/oder kraftschlüssige Festlegung und/oder Abstützung des Kanalplattenadapters unterstützt werden kann. Dabei ist es jedoch bevorzugt, dass der Schließbolzen das einzige bewegliche Mittel zur Festlegung ist. Besonders bevorzugt ist keine weitere Arretiervorrichtung vorgesehen, sodass das Festlegen des Kanalplattenadapters mittels einer einzigen Arretiervorrichtung erfolgt. Dagegen ist insbesondere eine form- und/oder kraftschlüssige Festlegung, Abstützung und/oder Anlage des Kanalplattenadapters an dem Rotorgehäusedeckel, insbesondere an einer der Arretiervorrichtung gegenüberliegenden Seite, bevorzugt, um ein Öffnen bzw. Lösen des Kanalplattenadapters an dieser Seite zu verhindern. Die Arretiervorrichtung ist bevorzugt an dem Rotorgehäusedeckel und/oder an dem Rotorgehäuse fest angeordnet.

Erfindungsgemäß wird die Arretiervorrichtung und insbesondere der Schließbolzen durch die Feder auf die Verriegelungsposition hin vorgespannt und bevorzugt dabei mit bzw. entlang der Wirkrichtung der Federkraft aus der Freigabeposition in die Verriegelungsposition verschoben, wobei besonders bevorzugt ist, dass die Arretiervorrichtung und insbesondere der Schließbolzen aufgrund der Federkraft vollständig auf die Verriegelungsposition vorgespannt ist und/oder in diese bewegt wird. Entsprechend muss die Arretiervorrichtung und insbesondere der Schließbolzen bevorzugt gegen die Federkraft bzw. durch äußere Krafteinwirkung auf die Feder von der Verriegelungsposition in die Freigabeposition bewegt werden. Insbesondere ist bevorzugt, dass der Schließbolzen auch in der Verriegelungsposition noch von der Feder vorgespannt ist und/oder durch die Federkraft in der Verriegelungsposition gehalten wird.

Der Schließbolzen kann grundsätzlich beliebig gestaltet sein. Bevorzugt ist der Schließbolzen einstückig und/oder rotationssymmetrisch gebildet. Weiterhin bevorzugt ist der Schließbolzen zu einer axialen Verriegelung und/oder zum Verschieben in einer axialen Richtung vorgesehen. Dabei ist der Schließbolzen erfindungsgemäß zwischen einer Freigabeposition und einer Verriegelungsposition verschieblich. In der Freigabeposition legt der Schließbolzen den Kanalplattenadapter nicht fest und befindet sich bevorzugt nicht im Eingriff mit dem Kanalplattenadapter. Besonders bevorzugt ist der Schließbolzen in der Freigabeposition so angeordnet, dass dieser nicht mit dem Kanalplattenadapter in Kontakt gelangen kann. In der Verriegelungsposition legt der Schließbolzen den Kanalplattenadapter dagegen gegen eine Rotation und/oder gegen ein Verschieben fest. Dazu befindet sich der Schließbolzen bevorzugt in einem wenigstens formschlüssigen und gegebenenfalls auch im kraftschlüssigen Eingriff am Kanalplattenadapter.

Erfindungsgemäß ist der Schließbolzen mittels der Feder auf die Verriegelungsposition hin vorgespannt. Die Feder ist dabei bevorzugt eine Spiralfeder und/oder eine Druckfeder. Ebenfalls bevorzugt ist die Feder unmittelbar an dem Schließbolzen angeordnet. Schließlich ist die Feder bevorzugt einstückig gebildet.

Die erfindungsgemäße Spinnvorrichtung sieht außerdem vor, dass der Kanalplattenadapter eine Schließbolzenaufnahme zur formschlüssigen Aufnahme eines Endes des Schließbolzens in der Verriegelungsposition aufweist, wobei die Schließbolzenaufnahme des am Rotorgehäusedeckel angeordneten Kanalplattenadapters bevorzugt in einer gemeinsamen Achse mit dem Schließbolzen und/oder mit der Vertiefung des Rotorgehäusedeckels angeordnet ist. Zumindest erfolgt bevorzugt ein Formschluss des Schließbolzens mit der Schließbolzenaufnahme, wozu der Schließbolzen besonders bevorzugt allseitig und/oder über den gesamten Umfang mit der Schließbolzenaufnahme in Anlage gelangt. Ebenfalls bevorzugt erfolgt der Formschluss wenigstens in der Öffnungsrichtung des Kanalplattenadapters. Besonders bevorzugt wird der Kanalplattenadapter an dem Rotorgehäusedeckel formschlüssig angeordnet. Entsprechend weisen der Kanalplattenadapter und der Rotorgehäusedeckel bevorzugt zwei aufeinander abgestimmte Konturen bzw. eine aufeinander abgestimmte Form der Oberfläche wenigstens in den Abschnitten zur gegenseitigen Anlage auf. Ebenfalls besonders bevorzugt wird zudem über einen Formschluss des Schließbolzens in der Schließbolzenaufnahme und/oder des Kanalplattenadapters an dem Rotorgehäusedeckel eine winkelgenaue Ausrichtung zwischen dem Kanalplattenadapter und dem Rotorgehäusedeckel erreicht.

Bei der erfindungsgemäßen Spinnvorrichtung ist die Arretiervorrichtung und insbesondere der federvorgespannte Schließbolzen derart gebildet, dass der Kanalplattenadapter beim Anordnen an dem Rotorgehäusedeckel selbsttätig verrastet, wobei bevorzugt beim Festlegen des Kanalplattenadapters zunächst die Feder belastet und besonders bevorzugt der Schließbolzen nachfolgend beim Erreichen einer geschlossenen Position des Kanalplattenadapters am Rotorgehäusedeckel selbsttätig aus der Freigabeposition in die Verriegelungsposition verschoben wird. Insbesondere ist die Arretiervorrichtung und insbesondere der federvorgespannte Schließbolzen derart gebildet, dass ein automatisches Festlegen und insbesondere Verrasten des Kanalplattenadapters beim Anordnen an den Rotorgehäusedeckel erfolgt. Die Spinnvorrichtung weist also bevorzugt eine

Selbstverriegelungsfunktion des Kanalplattenadapters an dem Rotorgehäusedeckel bzw. der Arretiervorrichtung auf. Entsprechend ist insbesondere bevorzugt, dass der Kanalplattenadapter in die geschlossene und betriebsbereite Position gebracht und dort festgelegt werden kann, ohne dass ein weiterer Eingriff eines Benutzers, insbesondere die Betätigung eines Bedienelements und/oder eines Fixierelements, wie einem Hebel oder dergleichen, notwendig ist. Besonders bevorzugt ist zum Einsetzen und/oder zum Festlegen des Kanalplattenadapters am Rotorgehäusedeckel keine manuelle Betätigung der Arretiervorrichtung notwendig. Die zunächst auftretende Belastung der Feder bewirkt somit bereits ein Bewegen und insbesondere ein Verschieben des Schließbolzens in die Freigabeposition. Das Verschieben aus einer Freigabeposition in eine Verriegelungsposition erfolgt dabei bevorzugt ausschließlich aufgrund der Krafteinwirkung der Feder auf den Schließbolzen. Bei dem Erreichen der betriebsbereiten Position wird die Feder weiterhin bevorzugt zumindest teilweise entlastet und dabei der Kanalplattenadapter festgelegt und insbesondere axial durch den Schließbolzen fixiert. Die geschlossene Position des Kanalplattenadapters entspricht einer betriebsbereiten Position des Kanalplattenadapters und insbesondere der gesamten Spinnvorrichtung.

Bei einer weiteren bevorzugten Ausgestaltung der erfindungsgemäßen Spinnvorrichtung legt die Arretiervorrichtung den Kanalplattenadapter derart fest, dass der Kanalplattenadapter durch eine Krafteinwirkung eines Benutzers und/oder durch Krafteinwirkungen im Betrieb der Spinnvorrichtung in Richtung einer Öffnungsrichtung nicht bewegbar bzw. nicht öffenbar ist. Dies wird dadurch erreicht, dass der Schließbolzen senkrecht zu einer Öffnungsrichtung des Kanalplattenadapters gegenüber dem Rotorgehäusedeckel angeordnet ist, wodurch in vorteilhafter Weise verhindert wird, dass auch beim Auftreten großer Kräfte in Richtung einer Öffnungsrichtung des Kanalplattenadapters gegenüber dem Rotorgehäusedeckel ein selbsttätiges Öffnen erfolgen kann, wie es bei einer anderweitigen Verrastung und/oder kraftschlüssigen Festlegung, beispielsweise mittels eines Haltemagneten, auftreten kann.

Gemäß einer vorteilhaften Weiterbildung der erfindungsgemäßen Spinnvorrichtung sind der Schließbolzen und bevorzugt auch die Feder innerhalb einer Vertiefung des Rotorgehäusedeckels verschieblich, insbesondere linear verschieblich angeordnet, wobei der Schließbolzen besonders bevorzugt gegen die Federkraft vollständig in das Innere der Vertiefung einschiebbar ist. Insbesondere bevorzugt ist der Schließbolzen in der Freigabeposition vollständig in die Vertiefung eingeschoben. Die Vertiefung kann grundsätzlich beliebige Funktionen aufweisen. Bevorzugt bildet die Vertiefung wenigstens eine lineare Führung des Schließbolzens zwischen der Freigabeposition und der Verriegelungsposition. Weiterhin bevorzugt ist der Schließbolzen ausschließlich linear verschiebbar und gegebenenfalls auch rotierbar, nicht jedoch verschwenk- und/oder verwinkelbar angeordnet. Die Vertiefung kann als Bohrung in dem Rotorgehäusedeckel ausgebildet sein. Es ist aber auch möglich die Vertiefung als Führungshülse auszubilden.

Weiterhin ist bevorzugt vorgesehen, dass der Schließbolzen eine derart geformte Endkontur aufweist und/oder eine Öffnung der Schließbolzenaufnahme des Kanalplattenadapters derart geformt ist, dass die den Schließbolzen kraftbelastende Feder beim Festlegen des Kanalplattenadapters an dem Rotorgehäusedeckel zunächst belastet und dabei der Schließbolzen in die Vertiefung des Rotorgehäusedeckels eingeschoben und anschließend der Schließbolzen beim Erreichen der geschlossenen Position des Kanalplattenadapters am Rotorgehäusedeckel selbsttätig aus einer Freigabeposition in eine Verriegelungsposition verschoben wird, wodurch ein besonders leichtes Anordnen des Kanalplattenadapters sowie ein selbsttätiges Festlegen unterstützt wird. Generell bestimmt die Endkontur des Schließbolzens dabei maßgeblich das Verriegelungsverhalten der Arretiervorrichtung und kann entsprechend den jeweiligen Bedürfnissen in seiner Form und Größe angepasst werden. Bevorzugt ist der Schließbolzen wenigstens im Bereich der Endkontur und besonders bevorzugt insgesamt rotationssymmetrisch geformt. Grundsätzlich ist jedoch auch eine nicht-rotationssymmetrische Form der Endkontur und/oder des übrigen Schließbolzens denkbar, wobei dann der Schließbolzen besonders bevorzugt rotationsfest, insbesondere in der Vertiefung des Rotorgehäusedeckels, und/oder linear verschieblich geführt ist.

Insbesondere bevorzugt weist der Schließbolzen eine konische Endkontur und/oder eine Endkontur mit einem sich zum Ende hin verringernden Durchmesser auf. Dabei verringert sich der Durchmesser des Schließbolzens zum Ende hin gegenüber dem Durchmesser des sich an die konische bzw. sich verengende Endkontur anschließenden Abschnitts des Schließbolzens bevorzugt zwischen 5 % und 80 %, besonders bevorzugt zwischen 10 % und 50 % und ganz besonders bevorzugt zwischen 10 % und 30 %. Daneben ist aber auch eine vollständig spitz zulaufende Endkontur denkbar. Alternativ oder zusätzlich weist die Endkontur bevorzugt einen gleichbleibenden Winkel der Oberfläche des Schließbolzens auf, der weiterhin bevorzugt zu der axialen Richtung des Schließbolzens zwischen 5° und 60°, besonders bevorzugt zwischen 10° und 45° und ganz besonders bevorzugt zwischen 10° und 30° beträgt.

Alternativ oder zusätzlich weist die Schließbolzenaufnahme des Kanalplattenadapters bevorzugt einen geringeren Innendurchmesser als der größte Durchmesser des Schließbolzens im Bereich der Endkontur auf. Durch einen geringeren Innendurchmesser der Schließbolzenaufnahme des Kanalplattenadapters als der größte Durchmesser des Schließbolzens im Bereich der Endkontur wird in vorteilhafter Weise eine allseitige Anlage des Schließbolzens an der Wandung der Schließbolzenaufnahme erreicht und/oder die maximale Eindringtiefe des Schließbolzens in die Schließbolzenaufnahme begrenzt. Um jedoch überhaupt ein Verschieben eines Teils des Schließbolzens und insbesondere der Endkontur in die Schließbolzenaufnahme zu ermöglichen, ist es weiterhin bevorzugt, dass der Innendurchmesser der Schließbolzenaufnahme größer ist als der geringste Durchmesser des Schließbolzens und/oder des Endes des Schließbolzens, insbesondere im Bereich der in die Schließbolzenaufnahme eindringenden Endkontur und/oder der konischen Endkontur.

Weiterhin ist auch bevorzugt, dass die Schließbolzenaufnahme in einem Öffnungsbereich sich zu einer Öffnung zur Aufnahme des Schließbolzens hin aufweitend und/oder konisch gebildet ist, wobei die Schließbolzenaufnahme bevorzugt asymmetrisch geformt ist und/oder nur in einem beim Festlegen des Kanalplattenadapters zuerst mit dem Schließbolzen in Kontakt gelangenden Innenbereich eine sich zur Öffnung hin aufweitende Abschrägung bzw. Oberfläche aufweist. Jedoch ist grundsätzlich auch denkbar, dass die Schließbolzenaufnahme über die gesamte Tiefe einen gleichbleibenden Innendurchmesser aufweist. Generell ist jedoch bevorzugt, dass die Innenwandung und/oder die Form der Schließbolzenaufnahme, wenigstens im Bereich des Öffnungsbereichs für den Schließbolzen und besonders bevorzugt insgesamt asymmetrisch und insbesondere nicht rotationssymmetrisch gebildet ist.

Bei einer bevorzugten Weiterbildung der erfindungsgemäßen Spinnvorrichtung ist die zum Vorspannen des Schließbolzens vorgesehene Feder den Schließbolzen, insbesondere einen Mittelabschnitt des Schließbolzens, umgebend angeordnet, wobei das eine Ende der Feder bevorzugt an einer Endseite der Vertiefung des Rotorgehäusedeckels und/oder das andere Ende der Feder ebenfalls bevorzugt am Schließbolzen und insbesondere an einer Abstützfläche des Schließbolzens abgestützt ist, wodurch eine besonders gute Kraftübertragung sowie eine besonders geschützte Anordnung der Feder erreicht wird. Bei der Ausbildung der Vertiefung als Führungshülse weist die Endseite der Führungshülse zum Abstützen der Feder bevorzugt eine Durchgangsbohrung auf, durch die ein Ende des Schließbolzens geführt verläuft, wobei der Durchmesser der Durchgangsbohrung besonders bevorzugt derart gewählt ist, dass der Schließbolzen verschieblich in der Durchgangsbohrung gehalten wird und/oder die Feder nicht durch die Durchgangsbohrung geschoben werden kann. Bei der Ausbildung der Vertiefung als Bohrung kann das Ende der Bohrung vorzugsweise durch ein Anschlagmittel begrenzt werden. Ein solches Anschlagmittel kann zum Beispiel als Blech ausgebildet sein. Entsprechend kann das Anschlagmittel zum Abstützen der Feder bevorzugt eine Durchgangsbohrung aufweisen, durch die ein Ende des Schließbolzens geführt verläuft, wobei der Durchmesser der Durchgangsbohrung besonders bevorzugt derart gewählt ist, dass der Schließbolzen verschieblich in der Durchgangsbohrung gehalten wird und/oder die Feder nicht durch die Durchgangsbohrung geschoben werden kann.

Die Abstützfläche wird dabei bevorzugt durch eine Vergrößerung des Durchmessers des Schließbolzens, insbesondere im Mittelbereich und/oder in Richtung des die Endkontur aufweisenden Endes, gebildet.

Um eine stabile Festlegung des Kanalplattenadapters zu erreichen, ist bevorzugt, dass weitere, insbesondere feststehende Befestigungselemente an dem Kanalplattenadapter und/oder an dem Rotorgehäusedeckel angeordnet sind, um eine Mehrpunktverriegelung zu erreichen. Die Mehrpunktverriegelung ist bevorzugt wenigstens eine Zweipunkt- und besonders bevorzugt wenigstens eine Dreipunktverriegelung, wobei einer der Verriegelungspunkte vorzugsweise durch den Schließbolzen gebildet wird. Durch den Einsatz einer solchen Mehrpunktverriegelung ist nicht nur sichergestellt, dass der Kanalplattenadapter im Bedarfsfall problemlos und schnell ein- und/oder ausgewechselt werden kann, sondern es ist auch gewährleistet, dass der Kanalplattenadapter auf seiner gesamten Anlagefläche mit einem nahezu gleichmäßigen Anlagedruck an dem Rotorgehäusedeckel anliegt. Die weiteren Befestigungselemente sind dabei bevorzugt an einer dem Schließbolzen gegenüberliegenden Seite und/oder gegenüberliegenden Hälfte des Kanalplattenadapters und/oder des Rotorgehäusedeckels angeordnet. Besonders bevorzugt sind die weiteren Befestigungselemente dabei aber feststehend und müssen zur Benutzung und insbesondere zum Festlegen des Kanalplattenadapters am Rotorgehäusedeckel nicht betätigt werden. Ganz besonders bevorzugt kann der Kanalplattenadapter in die weiteren Befestigungselemente eingeschoben und/oder eingesetzt werden. Insbesondere bevorzugt sind die weiteren feststehenden Befestigungselemente ausschließlich zur formschlüssigen Festlegung vorgesehen.

Um eine Ausrichtung im Hinblick auf die Rotation und/oder eine übereinstimmende Ausrichtung des Schließbolzens bzw. der Vertiefung des Schließbolzens zur Schließbolzenaufnahme des Kanalplattenadapters zu erreichen, weist eine bevorzugte Ausgestaltung der erfindungsgemäßen Spinnvorrichtung an dem Kanalplattenadapter und/oder an dem Rotorgehäusedeckel wenigstens einen und bevorzugt wenigstens zwei Permanentmagnete und besonders bevorzugt Permanentmagneteinsätze zur zusätzlichen Festlegung auf. Die Permanentmagneteinsätze wirken bevorzugt im Einbauzustand des Kanalplattenadapters mit korrespondierend angeordneten Permanentmagneteinsätzen oder ferromagnetischen bzw. magnetisch anziehbaren Oberflächenbereichen des Rotorgehäuses und/oder des Rotorgehäusedeckels zusammen. Alternativ können die Permanentmagneteinsätze auch am Rotorgehäuse bzw. Rotorgehäusedeckel angeordnet sein.

Schließlich sieht eine bevorzugte Ausgestaltung der erfindungsgemäßen Spinnvorrichtung vor, dass an einem Schließbolzen und bevorzugt an einem durch eine Durchgangsbohrung der Führungshülse oder des Anschlagmittels geführten und/oder an dem dem Kanalplattenadapter gegenüberliegenden und/oder dem nicht die Endkontur aufweisenden Ende des Schließbolzens ein Griffelement angeordnet ist, um den Schließbolzen gegen die Kraft der Feder in die Freigabeposition verschieben zu können und so den Kanalplattenadapter manuell zu entriegeln, insbesondere durch Ziehen am Griffelement und somit auch am Schließbolzen. Dabei ist weiterhin bevorzugt die maximale Verschiebbarkeit des Schließbolzens aus der Vertiefung heraus und/oder in die Verriegelungsposition durch Anschlag des Griffelements begrenzt, insbesondere im Bereich eines durch eine Öffnung der Führungshülse oder des Anschlagmittels geführten Endes des Schließbolzens. Ebenfalls bevorzugt ist die Arretiervorrichtung und insbesondere das Griffelement derart angeordnet, dass der Kanalplattenadapter auch bei einer geschlossenen Spinnvorrichtung und insbesondere einem geschlossenen Rotorgehäusedeckel betätigt und somit der Kanalplattenadapter gelöst werden kann.

Ein Ausführungsbeispiel der erfindungsgemäßen Vorrichtung wird nachstehend mit Bezug auf die Zeichnungen näher erläutert. In den Figuren zeigen:
- Fig. 1: eine schematische Ansicht einer Arretiervorrichtung einer Rotorspinnmaschine in einer Freigabeposition, und
- Fig. 2: eine schematische Ansicht der in Fig. 1 dargestellten Arretiervorrichtung der Rotorspinnmaschine in einer Verriegelungsposition.

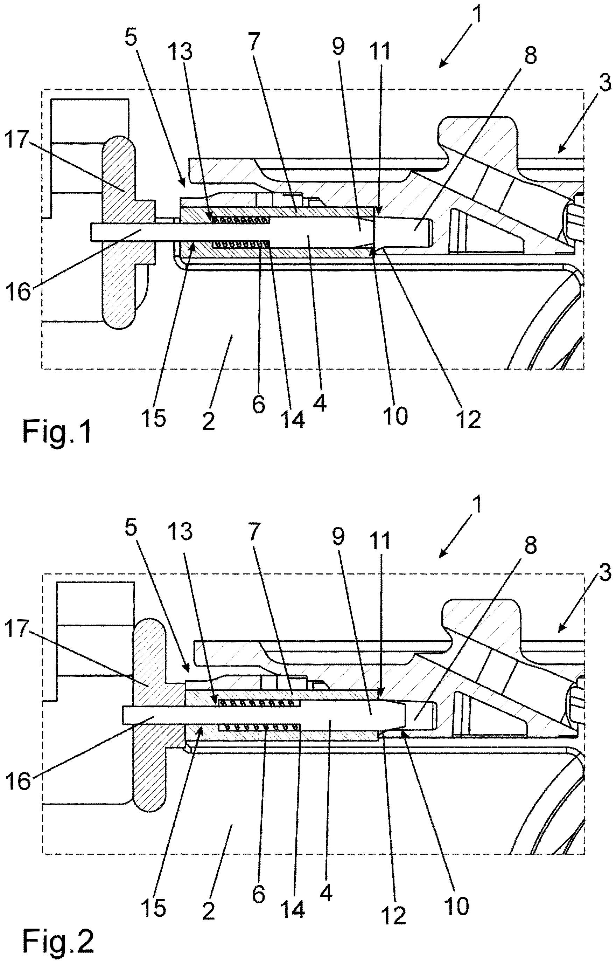

Eine abschnittsweise in der Figur 1 dargestellte Rotorspinnmaschine weist wenigstens einen während des Spinnbetriebs mit hoher Drehzahl rotierenden Spinnrotor auf, der innerhalb eines Rotorgehäuses angeordnet ist. Zum Spinnbetrieb wird das Rotorgehäuse geschlossen und ein Unterdruck angelegt. Um das Rotorgehäuse öffnen zu können, ist ein Rotorgehäusedeckel 2 vorgesehen, der schwenkbar am Rotorgehäuse angeordnet ist.

An dem Rotorgehäusedeckel 2 ist ein Kanalplattenadapter 3 auswechselbar angeordnet. Der Kanalplattenadapter 3 enthält einen Teil des Faserleitkanals, eine Fadenabzugsdüse und einen Anschluss an das Fadenabzugsröhrchen. Dabei ist der Kanalplattenadapter 3 auf den spezifisch verwendeten Spinnrotor abgestimmt, um eine genaue Fasereinspeisung und einen optimalen Fadenabzug zu gewährleisten. Bei einem Partiewechsel mit einem Spinnrotorwechsel wird auch der Kanalplattenadapter 3 durch einen auf den neuen Spinnrotor abgestimmten Kanalplattenadapter 3 ausgewechselt.

Der Kanalplattenadapter 3 ist an dem Rotorgehäusedeckel 2 mittels einer Arretiervorrichtung 5 festgelegt, die im Wesentlichen durch einen federvorgespannten Schließbolzen 4 gebildet ist. Dabei ist eine Feder 6 den Schließbolzen 4 umgebend angeordnet und spannt den Schließbolzen 4 auf eine Verriegelungsposition hin vor (siehe Fig. 2), sodass der Kanalplattenadapter 3 an dem Rotorgehäusedeckel 2 lagestabil und druckdicht gehalten wird.

Der Schließbolzen 4 ist an dem Rotorgehäusedeckel 2 innerhalb einer Führungshülse 7 angeordnet und durch die Führungshülse 7 linear verschieblich geführt. Der gesamte Schließbolzen 4 weist eine rotationssymmetrische Form mit einem runden Querschnitt auf. Die Feder 6 ist ebenfalls innerhalb der Führungshülse 7 angeordnet und mit einem Ende gegen eine Endseite 13 der Führungshülse 7 und mit einem zweiten Ende gegen eine Abstützfläche 14 des Schließbolzens 4 abgestützt. Die Abstützfläche 14 wird dabei durch eine Verringerung des Durchmessers des hinteren Abschnitts des Schließbolzens 4 gebildet. Gemäß einem nicht gezeigten Ausführungsbeispiel kann der Schließbolzen 4 auch direkt in einer Bohrung des Rotorgehäusedeckels 2 geführt werden. Zur Abstützung der Feder 6 kann an einem Ende der Bohrung ein Anschlagmittel, vorzugsweise ein Blech mit einer Durchgangsbohrung angeordnet sein.

Um den Schließbolzen 4 gegen die Kraft der Feder 6 aus der Verriegelungsposition in eine Freigabeposition bewegen zu können, ist das hintere Ende 16 des Schließbolzens 4 durch eine Durchgangsbohrung 15 der Führungshülse 7 geführt und weist ein Griffelement 17 zum Ziehen auf. Dabei ist es möglich, den Schließbolzen 4 mittels des Griffelements 17 unabhängig davon, ob der Rotorgehäusedeckel 2 geöffnet oder geschlossen ist, aus der Verriegelungsposition in die Freigabeposition zu verschieben bzw. zu ziehen.

Um den Kanalplattenadapter 3 festlegen zu können, weist dieser eine Schließbolzenaufnahme 8 auf, die als Bohrung gebildet ist und in einem Innenwandbereich, der beim Festlegen des Kanalplattenadapters 3 an dem Rotorgehäusedeckel 2 zuerst mit dem Schließbolzen 4 in Kontakt gelangt, eine Abschrägung 12 aufweist, sodass die Schließbolzenaufnahme 8 im Bereich der Öffnung 11 zur Aufnahme des Schließbolzens 4 aufgeweitet ist.

Um den Kanalplattenadapter 3 besonders leicht und schnell festlegen zu können, weist der Schließbolzen 4 eine derart geformte Endkontur 10 an einem Ende 9 auf, dass die den Schließbolzen 4 kraftbelastende Feder 6 beim Festlegen des Kanalplattenadapters 3 an dem Rotorgehäusedeckel 2 zunächst belastet und dabei der Schließbolzen 4 in die Führungshülse 7 eingeschoben und anschließend der Schließbolzen 4 beim Erreichen der geschlossenen Position des Kanalplattenadapters 3 am Rotorgehäusedeckel 2 selbsttätig aus einer Freigabeposition in eine Verriegelungsposition verschoben wird. Dazu weist die Endkontur 10 eine konische Abschrägung auf.

### Bezugszeichenliste

- 1: Spinnvorrichtung
- 2: Rotorgehäusedeckel
- 3: Kanalplattenadapter
- 4: Schließbolzen
- 5: Arretiervorrichtung
- 6: Feder
- 7: Führungshülse
- 8: Schließbolzenaufnahme
- 9: erstes Ende des Schließbolzens
- 10: Endkontur
- 11: Öffnung der Schließbolzenaufnahme
- 12: Abschrägung
- 13: Endseite der Führungshülse
- 14: Abstützfläche
- 15: Durchgangsbohrung
- 16: zweites Ende des Schließbolzens
- 17: Griffelement

## Patentansprüche

1. Spinnvorrichtung (1) zum Herstellen eines Garns aus einem Fasermaterial, mit
- einem Rotorgehäuse, innerhalb dem ein im Spinnbetrieb mit hoher Drehzahl umlaufender Spinnrotor angeordnet ist,
- einem am Rotorgehäuse angeordneten Rotorgehäusedeckel (2) zum Öffnen und Schließen des Rotorgehäuses, und
- einem am Rotorgehäusedeckel (2) auswechselbar festgelegten Kanalplattenadapter (3),
**dadurch gekennzeichnet, dass**
- das Festlegen des Kanalplattenadapters (3) an dem Rotorgehäusedeckel (2) durch ein Verschieben eines Schließbolzens (4) einer Arretiervorrichtung (5) aus einer Freigabeposition in die Verriegelungsposition erfolgt, wobei
- der Schließbolzen (4) mittels einer Feder (6) auf die Verriegelungsposition vorgespannt ist und
- der Kanalplattenadapter (3) eine Schließbolzenaufnahme (8) zur formschlüssigen Aufnahme eines Endes (9) des Schließbolzens (4) in der Verriegelungsposition aufweist und
- die Arretiervorrichtung (5) und insbesondere der federvorgespannte Schließbolzen (4) derart gebildet ist, dass der Kanalplattenadapter (3) beim Anordnen an dem Rotorgehäusedeckel (2) selbsttätig verrastet, wobei beim Festlegen des Kanalplattenadapters (3) zunächst die Feder (6) belastet und der Schließbolzen (4) nachfolgend beim Erreichen einer geschlossenen Position des Kanalplattenadapters (3) am Rotorgehäusedeckel (2) selbsttätig aus der Freigabeposition in die Verriegelungsposition verschoben wird.

2. Spinnvorrichtung nach Anspruch 1, **dadurch gekennzeichnet, dass** die Arretiervorrichtung (5) den Kanalplattenadapter (3) derart festlegt, dass der Kanalplattenadapter (3) durch eine Krafteinwirkung eines Benutzers und/oder im Betrieb der Spinnvorrichtung (1) nicht öffenbar ist, wozu der Schließbolzen (4) senkrecht zu einer Öffnungsrichtung des Kanalplattenadapters (3) gegenüber dem Rotorgehäusedeckel (2) angeordnet ist.

3. Spinnvorrichtung nach wenigstens einem der vorhergehenden Ansprüche, **dadurch gekennzeichnet, dass** der Schließbolzen (4) und die Feder (6) innerhalb einer Vertiefung des Rotorgehäusedeckels (2) linear verschieblich angeordnet sind, wobei der Schließbolzen (4) vollständig in die Vertiefung einschiebbar ist.

4. Spinnvorrichtung nach wenigstens einem der vorhergehenden Ansprüche, **dadurch gekennzeichnet, dass** der Schließbolzen (4) eine derart geformte Endkontur (10) aufweist und/oder eine Öffnung (11) der Schließbolzenaufnahme (8) derart geformt ist, dass die den Schließbolzen (4) kraftbelastende Feder (6) beim Festlegen des Kanalplattenadapters (3) an dem Rotorgehäusedeckel (2) zunächst belastet und dabei der Schließbolzen (4) in die Vertiefung des Rotorgehäusedeckels (2) eingeschoben und anschließend der Schließbolzen (4) beim Erreichen der geschlossenen Position des Kanalplattenadapters (3) am Rotorgehäusedeckel (2) selbsttätig aus einer Freigabeposition in eine Verriegelungsposition verschoben wird.

5. Spinnvorrichtung nach wenigstens einem der vorhergehenden Ansprüche, **dadurch gekennzeichnet, dass** der Schließbolzen (4) eine konische Endkontur (10) und/oder eine Endkontur (10) mit einem sich verringernden Durchmesser und/oder die Schließbolzenaufnahme (8) des Kanalplattenadapters (3) einen geringeren Innendurchmesser als der größte Durchmesser des Schließbolzens (4) im Bereich der Endkontur (10) aufweist.

6. Spinnvorrichtung nach wenigstens einem der vorhergehenden Ansprüche, **dadurch gekennzeichnet, dass** die Schließbolzenaufnahme (8) sich zu einer Öffnung (11) zur Aufnahme des Schließbolzens (4) hin aufweitend gebildet ist, wobei die Schließbolzenaufnahme (8) bevorzugt asymmetrisch geformt ist und/oder nur in einem beim Festlegen des Kanalplattenadapters (3) zuerst mit dem Schließbolzen (4) in Kontakt gelangenden Innenbereich eine sich zur Öffnung (11) hin aufweitende Abschrägung (12) aufweist.

7. Spinnvorrichtung nach wenigstens einem der vorhergehenden Ansprüche, **dadurch gekennzeichnet, dass** die Feder (6) zum Vorspannen des Schließbolzens (4) den Schließbolzen (4) umgebend angeordnet ist, wobei das eine Ende der Feder (6) an einer Endseite (13) der Vertiefung des Rotorgehäusedeckels (2) und das andere Ende der Feder (6) an einer Abstützfläche (14) des Schließbolzens (4) abgestützt ist.

8. Spinnvorrichtung nach wenigstens einem der vorhergehenden Ansprüche, **dadurch gekennzeichnet, dass** weitere feststehende Befestigungselemente an dem Kanalplattenadapter (3) und/oder an dem Rotorgehäusedeckel (2) angeordnet sind, um eine Mehrpunktverriegelung zu erreichen.

9. Spinnvorrichtung nach wenigstens einem der vorhergehenden Ansprüche, **dadurch gekennzeichnet, dass** der Kanalplattenadapter (3) und/oder der Rotorgehäusedeckel (2) wenigstens einen und bevorzugt wenigstens zwei Permanentmagneteinsätze zur zusätzlichen Festlegung aufweist.

10. Spinnvorrichtung nach wenigstens einem der vorhergehenden Ansprüche, **dadurch gekennzeichnet, dass** an dem nicht die Endkontur (10) aufweisenden Ende (16) des Schließbolzens (4) ein Griffelement (17) angeordnet ist, um den Schließbolzen (4) gegen die Kraft der Feder (6) in die Freigabeposition verschieben zu können.

## Claims

1. A spinning device (1) for producing a yarn from a fibre material, with
- a rotor housing, within which a spinning rotor rotating at high speed during spinning operation is arranged,
- a rotor housing cover (2) arranged on the rotor housing for opening and closing the rotor housing, and
- a channel plate adapter (3) exchangeably fixed to the rotor housing cover (2), **characterised in that**
- the channel plate adapter (3) is fixed to the rotor housing cover (2) by the displacement of a closing bolt (4) of a detent (5) from a release position into the locking position, whereby
- the closing bolt (4) is preloaded towards the locking position by means of a spring (6) and
- the channel plate adapter (3) has a closing bolt receptacle (8) for positively receiving one end (9) of the closing bolt (4) in the locking position and
- the detent (5), in particular the spring-loaded closing bolt (4), is formed in such a way that the channel plate adapter (3) automatically latches into place when it is arranged on the rotor housing cover (2), with the spring (6) initially being loaded when the channel plate adapter (3) is fixed, and the closing bolt (4) subsequently being automatically displaced from the release position into the locking position when the channel plate adapter (3) reaches a closed position on the rotor housing cover (2).

2. The spinning device according to claim 1, **characterised in that** the detent (5) fixes the channel plate adapter (3) in such a way that the channel plate adapter (3) cannot be opened by the application of force by a user and/or during operation of the spinning device (1), for which purpose the closing bolt (4) is arranged perpendicular to an opening direction of the channel plate adapter (3) relative to the rotor housing cover (2).

3. The spinning device according to at least one of the preceding claims, **characterised in that** the closing bolt (4) and the spring (6) are linearly displaceably arranged within a recess of the rotor housing cover (2), it being possible for the closing bolt (4) to be fully inserted into the recess.

4. The spinning device according to at least one of the preceding claims, **characterised in that** the closing bolt (4) has an end contour (10) shaped in such a way and/or an opening (11) of the closing bolt receptacle (8) is shaped in such a way that the spring (6) exerting force on the closing bolt (4) is initially loaded when the channel plate adapter (3) is fixed to the rotor housing cover (2), and in the process the closing bolt (4) is pushed into the recess of the rotor housing cover (2), and subsequently the closing bolt (4) is automatically displaced from a release position into a locking position when the channel plate adapter (3) reaches the closed position on the rotor housing cover (2).

5. The spinning device according to at least one of the preceding claims, **characterised in that** the closing bolt (4) has a conical end contour (10) and/or an end contour (10) with a decreasing diameter and/or the closing bolt receptacle (8) of the channel plate adapter (3) has a smaller inner diameter than the largest diameter of the closing bolt (4) in the area of the end contour (10).

6. The spinning device according to at least one of the preceding claims, **characterised in that** the closing bolt receptacle (8) widens towards an opening (11) for receiving the closing bolt (4), the closing bolt receptacle (8) preferably being asymmetrically shaped and/or having a bevel (12) widening towards the opening (11) only in an inner area first coming into contact with the closing bolt (4) when the channel plate adapter (3) is fixed.

7. The spinning device according to at least one of the preceding claims, **characterised in that** the spring (6) for preloading the closing bolt (4) is arranged surrounding the closing bolt (4), one end of the spring (6) being supported on an end side (13) of the recess of the rotor housing cover (2) and the other end of the spring (6) being supported on a support surface (14) of the closing bolt (4).

8. The spinning device according to at least one of the preceding claims, **characterised in that** further fixed fastening elements are arranged on the channel plate adapter (3) and/or on the rotor housing cover (2) in order to achieve a multi-point locking.

9. The spinning device according to at least one of the preceding claims, **characterised in that** the channel plate adapter (3) and/or the rotor housing cover (2) have/has at least one and preferably at least two permanent magnet inserts for additional fixing.

10. The spinning device according to at least one of the preceding claims, **characterised in that** a gripping element (17) is arranged at the end (16) of the closing bolt (4) not having the end contour (10), in order to be able to displace the closing bolt (4) into the release position against the force of the spring (6).

## Revendications

1. Dispositif de filage (1) permettant de fabriquer un fil à partir d'un matériau fibreux, comportant
- un carter de rotor à l'intérieur duquel est agencé un rotor de filage tournant à grande vitesse en mode de filage,
- un couvercle de carter de rotor (2) agencé sur le carter de rotor et servant à ouvrir et à fermer le carter de rotor, et
- un adaptateur de plaque de canalisation (3) fixé de manière interchangeable au couvercle de carter de rotor (2),
**caractérisé en ce que**
- la fixation de l'adaptateur de plaque de canalisation (3) sur le couvercle de carter de rotor (2) s'effectue par un déplacement d'un pêne (4) d'un dispositif de blocage (5) d'une position de libération dans la position de verrouillage, dans lequel
- le pêne (4) est précontraint dans la position de verrouillage au moyen d'un ressort (6) et
- l'adaptateur de plaque de canalisation (3) présente un logement de pêne (8) destiné à recevoir par complémentarité de forme une extrémité (9) du pêne (4) dans la position de verrouillage et
le dispositif de blocage (5) et en particulier le pêne (4) précontraint par ressort est formé de telle sorte que l'adaptateur de plaque de canalisation (3) s'enclenche automatiquement lors de l'agencement sur le couvercle de carter de rotor (2), dans lequel le ressort (6) est d'abord sollicité lors de la fixation de l'adaptateur de plaque de canalisation (3) et le pêne (4) est ensuite déplacé automatiquement de la position de libération dans la position de verrouillage lorsque l'adaptateur de plaque de canalisation (3) atteint une position fermée sur le couvercle de carter de rotor (2).

2. Dispositif de filage selon la revendication 1, **caractérisé en ce que** le dispositif de blocage (5) fixe l'adaptateur de plaque de canalisation (3) de telle sorte que l'adaptateur de plaque de canalisation (3) ne puisse pas être ouvert par l'application d'une force par un utilisateur et/ou pendant le fonctionnement du dispositif de filage (1), ce pour quoi le pêne (4) est agencé perpendiculairement à une direction d'ouverture de l'adaptateur de plaque de canalisation (3) par rapport au couvercle de carter de rotor (2).

3. Dispositif de filage selon au moins l'une des revendications précédentes, **caractérisé en ce que** le pêne (4) et le ressort (6) sont agencés de manière à pouvoir se déplacer linéairement à l'intérieur d'un renfoncement du couvercle de carter de rotor (2), dans lequel le pêne (4) peut être entièrement inséré dans le renfoncement.

4. Dispositif de filage selon au moins l'une des revendications précédentes, **caractérisé en ce que** le pêne (4) présente un contour d'extrémité (10) et/ou une ouverture (11) du logement de pêne (8) qui sont formés de telle sorte que le ressort (6) exerçant une force sur le pêne (4) est tout d'abord sollicité lors de la fixation de l'adaptateur de plaque de canalisation (3) sur le couvercle de carter de rotor (2), que le pêne (4) est ainsi inséré dans le renfoncement du couvercle de carter de rotor (2) et que le pêne (4) est ensuite déplacé automatiquement d'une position de libération dans une position de verrouillage lorsque l'adaptateur de plaque de canalisation (3) atteint la position fermée sur le couvercle de carter de rotor (2).

5. Dispositif de filage selon au moins l'une des revendications précédentes, **caractérisé en ce que** le pêne (4) présente un contour d'extrémité (10) conique et/ou un contour d'extrémité (10) dont le diamètre diminue et/ou le logement de pêne (8) de l'adaptateur de plaque de canalisation (3) présente un diamètre intérieur plus petit que le plus grand diamètre du pêne (4) dans la zone du contour d'extrémité (10).

6. Dispositif de filage selon au moins l'une des revendications précédentes, **caractérisé en ce que** le logement de pêne (8) est formé en s'élargissant vers une ouverture (11) destinée à loger le pêne (4), dans lequel le logement de pêne (8) est de préférence formé de manière asymétrique et/ou ne présente un biseau (12) s'élargissant vers l'ouverture (11) que dans une zone intérieure entrant d'abord en contact avec le pêne (4) lors de la fixation de l'adaptateur de plaque de canalisation (3).

7. Dispositif de filage selon au moins l'une des revendications précédentes, **caractérisé en ce que** le ressort (6) destiné à précontraindre le pêne (4) est agencé de manière à entourer le pêne (4), dans lequel une extrémité du ressort (6) prend appui sur un côté d'extrémité (13) du renfoncement du couvercle de carter de rotor (2) et l'autre extrémité du ressort (6) prend appui sur une surface d'appui (14) du pêne (4).

8. Dispositif de filage selon au moins l'une des revendications précédentes, **caractérisé en ce que** d'autres éléments de fixation fixes sont agencés sur l'adaptateur de plaque de canalisation (3) et/ou sur le couvercle de carter de rotor (2) afin d'obtenir un verrouillage multipoint.

9. Dispositif de filage selon au moins l'une des revendications précédentes, **caractérisé en ce que** l'adaptateur de plaque de canalisation (3) et/ou le couvercle de carter de rotor (2) présentent au moins un et de préférence au moins deux inserts d'aimants permanents permettant la fixation supplémentaire.

10. Dispositif de filage selon au moins l'une des revendications précédentes, **caractérisé en ce qu'**un élément de préhension (17) est agencé à l'extrémité (16) du pêne (4) qui ne présente pas le contour d'extrémité (10), afin de pouvoir déplacer le pêne (4) contre la force du ressort (6) dans la position de libération.
